(19) Europäisches Patentamt
European Patent Office
Office européen des brevets

(11) Publication number : **0 521 664 A1**

(12) **EUROPEAN PATENT APPLICATION**

(21) Application number : **92305901.8**

(51) Int. Cl.[5] : **G03C 1/825,** G03C 1/83

(22) Date of filing : **26.06.92**

(30) Priority : **04.07.91 JP 189487/91**

(43) Date of publication of application :
**07.01.93 Bulletin 93/01**

(84) Designated Contracting States :
**DE FR GB NL**

(71) Applicant : **KONICA CORPORATION**
**26-2, Nishi-shinjuku 1-chome Shinjuku-ku**
**Tokyo (JP)**

(72) Inventor : **Usagawa, Yasushi, Konica Corporation**
**1, Sakura-machi**
**Hino-shi, Tokyo (JP)**
Inventor : **Kawashima, Yasuhiko, Konica Corporation**
**1, Sakura-machi**
**Hino-shi, Tokyo (JP)**
Inventor : **Kagawa, Nobuaki, Konica Corporation**
**1, Sakura-machi**
**Hino-shi, Tokyo (JP)**
Inventor : **Hirabayashi, Shigeto, Konica Corporation**
**1, Sakura-machi**
**Hino-shi, Tokyo (JP)**

(74) Representative : **Ellis-Jones, Patrick George Armine**
**J.A. KEMP & CO. 14 South Square Gray's Inn**
**London WC1R 5LX (GB)**

(54) **Silver halide photographic light sensitive material.**

(57) A silver halide light-sensitive material is disclosed. The light-sensitive material comprises a support and silver halide emulsion layer and at least one of said silver halide emulsion layer or another hydrophilic colloid layer provided on said support contains a silver salt of a compound represented by the following Formula I, II, III, IV or V :

$$A{=}L(L{=}L)_{n1}{-}E \qquad (I)$$

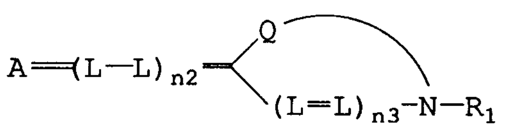

(II)

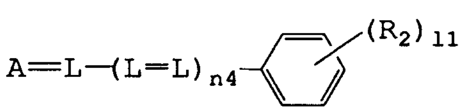

(III)

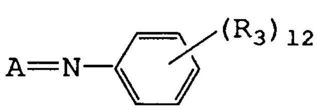

(IV)

$$A'{-}N{=}N{-}W \qquad (V)$$

wherein $R_1$ is an alkyl or alkenyl group, $R_2$ and $R_3$ are each a specified substituent ; A and A′ are each a specified heterocyclic group ; L is a methine group ; E is a group having an acidic nuclei ; Q is a group of atoms necessary for forming a heterocyclic ring ; W is an aryl group or a heterocyclic group ; $n_1$ and $n_2$ are each an integer of 0 to 3 ; $n_3$ and $n_4$ are each 0 to 2 and $l_1$ and $l_2$ are each 0 to 3.

The silver salts of the compounds are suitable for antihalation or antiirradiation dye excellent in discoloring and antidiffusion properties.

EP 0 521 664 A1

## FIELD OF THE INVENTION

This invention relates to a silver halide photographic light sensitive material containing a novel antidiffusible dye and, particularly, to a silver halide photographic light sensitive material containing a novel antidiffusible dye improving an efflux-discoloring property in the course of processing the light sensitive material.

## BACKGROUND OF THE INVENTION

Generally in a silver halide photographic light sensitive material (hereinafter referred to as a light sensitive material), it has been known that a dye is contained in the component layers of a light sensitive material so as to absorb the rays of light having a specific wavelength for the purpose of serving as a light absorption filter, preventing a halation, preventing irradiation or controlling the sensitivity of a light-sensitive emulsion. It has, therefore, been carried out so far to color a hydrophilic colloidal layer with the above-mentioned dye.

Among the component layers of the light sensitive material, a filter layer is usually positioned between the upper layer of a light sensitive emulsion layer or the emulsion layer itself and another emulsion layer so as to play a role to convert the spectral composition of incident light reaching the emulsion layer into a preferable spectral composition; and an antihalation layer is interposed between a light sensitive emulsion layer and a support or is provided to the back side of the support, with the purpose of improving an image sharpness, so as to absorb useless reflected light on the interface between the emulsion layer and the support or on the back of the support.

Further, an image sharpness improvement has also been carried out by coloring a light sensitive emulsion layer with a dye and absorbing reflected light or diffused light which is useless for silver halide grains so as to prevent an irradiation.

The dyes applicable for satisfying the above-mentioned purposes have not only to display the excellent absorption spectral characteristics so as to meet the purposes of applying them, but also to readily be dissolved out of a light sensitive material in the course of development process the light sensitive material and not to produce any residual color stains by the dyes after completing the development process and, further, to satisfy the various requirements such as that a light sensitive emulsion cannot be affected by a fog or desensitization production, that the dyes cannot be diffused from a colored layer into the other layers and that an aging stability can be excellent and neither color fading nor discoloration can also be produced in the light sensitive material or in an aqueous solution.

With the purposes of developing the dyes satisfying the above-mentioned requirements, many studies have so far been made. For example, U.S. Patent Nos. 3,540,887, 3,544,325 and 3,560,214; Japanese Patent Examined Publication (hereinafter referred to as JP-Examined Publication) No. 31-10578/1956 and Japanese Patent Publication Open to Public Inspection (hereinafter referred to as JP OPI Publication) No. 51-3623/1976 propose the benzylidene dyes; British Patent No. 506,385 and JP Examined Publication No. 39-22069/1964, the oxonol dyes; U.S. Patent No. 2,493,747, the merocyanine dyes; and U.S. Patent No. 1,845,404, the styryl dyes; respectively.

Some of the above-given conventional dyes have the characteristics such as that they have a relatively less effect on emulsion characteristics and also display the bleaching, dissolving out or discoloring characteristics in a processing step. However, these dyes have been unsatisfactory from the viewpoint of the antidiffusibility. In other words, when serving a specific layer among plural emulsion layers as a filter layer or an antihalation layer upon selectively coloring it, there have found not only the defects that the dyes are seriously diffused into other layers and the light absorption effects are lowered, but also another defect that an unfavorable spectral function affects the other layers.

As for the method of selectively dyeing a specific hydrophilic colloidal layer for overcoming the above-mentioned defects, there have proposed a method of fixing a dye with a mordant and another method of making use of an antidiffusible dye.

In the method of making use of a mordant, however, there have found the defects that a coatability has been deteriorated and the diffusion has not satisfactorily be controlled among layers and that the dissolving-out property and discoloration property have also been deteriorated in the course of processing treatments and a high pH processing solution has been required to use or a rapid processing aptitude has further been deteriorated.

There also have made many studies on the methods of making use of antidiffusible dyes. Among these studies, British Patent No. 1,077,049 and U.S. Patent No. 3,471,293 disclose the silver salts of oxonol dyes containing specifically structured thiobarbituric acid nuclei

However, these well-known silver salt dyes have has the defect that the decoloration and dissolving-out properties have been deteriorated in the course of processing treatments, though they have the characteristics

such as a satisfactory antidiffusibility and an interlayer diffusion controllability.

It has therefore been the actual situation that any dyes capable of satisfying the above-mentioned requirements have not been developed and the development of such a dye has still been demanded.

## OBJECTS OF THE INVENTION

It is an object of the invention to provide a silver halide photographic light-sensitive material having excellent absorption spectral characteristics in a light-sensitive silver halide emulsion layer or a non-light-sensitive colloidal layer and containing an antidiffusible dye.

Another object of the invention is to provide a silver halide photographic light-sensitive material capable of displaying an excellent dissolving-out property and a decoloration property in the course of photographic processing steps and containing a dye excellent in rapid photographic processing aptitude.

A further object of the invention is to provide a silver halide photographic light-sensitive material containing a dye not affecting any photographic characteristics of a light-sensitive silver halide emulsion, such as fog production or desensitization.

## SUMMARY OF THE INVENTION

The above-mentioned objects of the invention can be achieved with the following silver halide photographic light-sensitive material.

The silver halide photographic light-sensitive material characterized in containing the silver salt of a compound represented by the following Formula [I] through [V].

Formula [I]

$$A=L-(L=L)_{n1}-E$$

Formula [II]

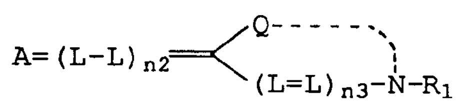

Formula [III]

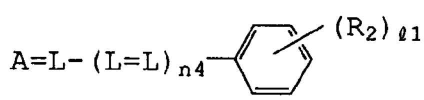

Formula [IV]

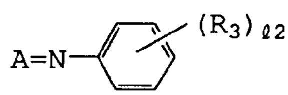

Formula [V]

$$A'-N=N-W$$

wherein $R_1$ represents an alkyl group or an alkenyl group; $R_2$ and $R_3$ represent each an alkyl group, an alkenyl group, an aryl group, a heterocyclic group, a halogen atom, a cyano group, a sulfo group $-COR_{10}$, $-CON(R_{10})(R_{11})$, $-N(R_{10})(R_{11})$, $-OR_{10}$, $-SOR_{10}$, $-SO_2R_{10}$, $-SO_2N(R_{10})(R_{11})$, $-N(R_{10})COR_{11}$, $-N(R_{10})SO_2R_{11}$, $-N(R_{10})CON(R_{11})(R_{12})$, $-SR_{10}$ or $-COOR_{10}$; and $R_{10}$ through $R_{12}$ represent each a hydrogen atom, an alkyl group, an alkenyl group, an aryl group or a heterocyclic group.

A represents a group represented by the following Formulas [$A_1$] through [$A_4$]; and A′ represents a group represented by the following Formulas [$A'_1$] through [$A'_4$].

Formula [$A_1$]

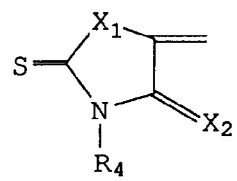

Formula [$A_2$]

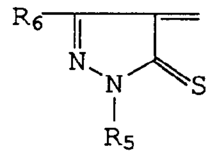

Formula [$A_3$]

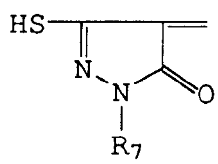

Formula [$A_4$]

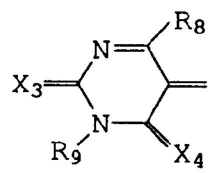

Formula [$A'_1$]

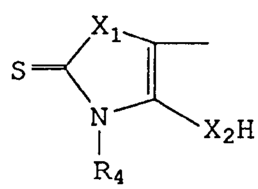

Formula [$A'_2$]

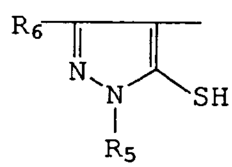

Formula [$A'_3$]

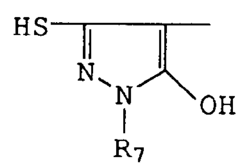

Formula [$A'_4$]

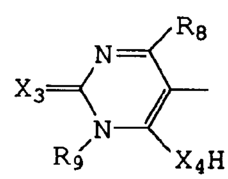

wherein $R_4$, $R_5$, $R_7$ and $R_9$ represent each a hydrogen atom, an alkyl group, an alkenyl group, an aryl group or a heterocyclic group; $R_6$ represents an alkyl group, an alkenyl group, an aryl group, a heterocyclic group, a cyano group, $-COR_{13}$, $-CON(R_{13})(R_{14})$, $-N(R_{13})(R_{14})$, $-OR_{13}$, $-SOR_{13}$, $-SO_2R_{13}$, $-SO_2N(R_{13})(R_{14})$, $-N(R_{13})COR_{14}$, $-N(R_{13})SO_2R_{14}$, $-N(R_{13})CON(R_{14})(R_{15})$, $-SR_{13}$ or $-COOR_{13}$; $R_{13}$ through $R_{15}$ represent each a hydrogen atom, an alkyl group, an alkenyl group, an aryl group or a heterocyclic group; $R_8$ is synonymous with those represented by $R_2$ and $R_3$; $X_1$ represents an oxygen atom, a sulfur atom, a selenium atom or $-N-R_{16}$; $R_{16}$ is synonymous with those represented by $R_4$; and $X_2$, $X_3$ and $X_4$ represent each an oxygen atom or a sulfur atom.

L represents a methine group; E represents a group having an acidic nucleus; Q represents a group consisting of non-metal atoms required to form a heterocyclic ring; and W represents an aryl group or a heterocyclic group.

$n_1$ and $n_2$ are each an integer of 0 through 3; $n_3$ and $n_4$ are each an integer of 0 through 2; and $l_1$ and $l_2$ are each an integer of 0 through 3.

## DETAILED DESCRIPTION OF THE INVENTION

The compounds represented by Formulas [I] through [V] will now be detailed below.

In the above-given Formulas, the alkyl groups represented by $R_1$ through $R_{16}$ include, for example, a methyl group, an ethyl group, a propyl group, an isopropyl group, an n-butyl group, a tert-butyl group, a cyclopentyl group and a cyclohexyl group. These alkyl groups may also be substituted with the following groups, namely,

a hydroxy group, a cyano group, a sulfo group, a carboxyl group, a halogen atom such as a fluorine atom, a chlorine atom and a bromine atom, an alkoxy group such as a methoxy group and an ethoxy group, an aryloxy group such as a phenoxy group, a 4-sulfophenoxy group and a 2,4-disulfophenoxy group, an aryl group such as a phenyl group, a 4-sulfophenyl group and a 2,5-disulfophenyl group, an alkoxycarbonyl group such as a methoxycarbonyl group an ethoxycarbonyl group and an aryloxycarbonyl group such as a phenoxycarbonyl group.

The aryl groups represented by $R_2$ through $R_{16}$ and W include, for example, a phenyl group and a naphthyl group. These groups may also be substituted with the same groups as the alkyl groups each represented by $R_1$ through $R_{16}$.and as the substituents for the alkyl groups.

The heterocyclic groups represented by $R_2$ through $R_{16}$ and W include, for example, a pyridyl group, a thiazolyl group, an oxazolyl group, an imidazolyl group, a furyl group, a pyrrolyl group, a pyrazinyl group, a pyrimidinyl group, a pyridazinyl group, a purinyl group, a selenazolyl group, a sulforanyl group, a piperidinyl group, a pyrazolyl group and a tetrazolyl group. These groups may also be substituted with the same groups as the alkyl groups represented by $R_1$ through $R_{16}$ and as the substituents given as the substituents for the alkyl groups.

The alkenyl groups represented by $R_1$ through $R_{16}$ include, for example, a vinyl group and an allyl group. These groups may also be substituted with the same groups as the alkyl groups represented by $R_1$ through $R_{16}$ and as the substituents given as the substituents for the alkyl groups.

The groups having each an acidic nucleus, which are represented by E in Formula [I], include, for example, the groups having the nuclei given in Formulas [A'$_1$] through [A'$_4$] and the groups represented by the following formulas;

Formula

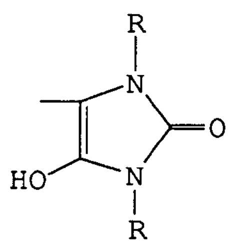 , 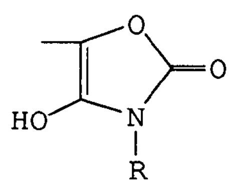 , 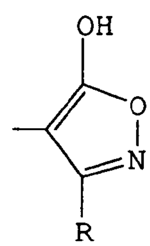 ,

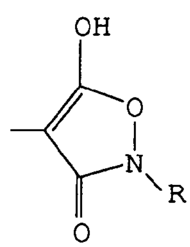 , 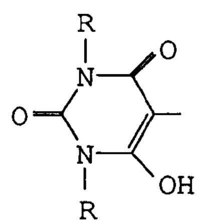 , 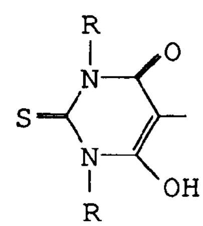 ,

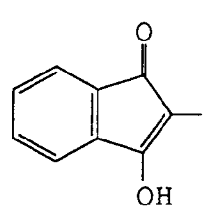 , 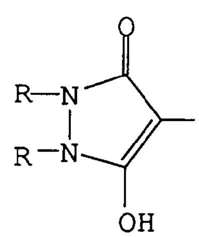

in the above formula R represents a hydrogen atom, an alkyl group, an alkenyl group or a heterocyclic group.

Formula

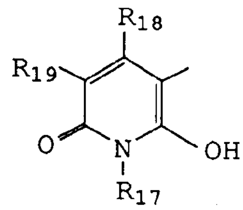

wherein $R_{17}$ is synonymous with those represented by $R_4$ of the foregoing Formula [$A_1$]; and $R_{18}$ and $R_{19}$ represent each a hydrogen atom or a group given by $R_2$ of the forgoing Formula [III].

Formula

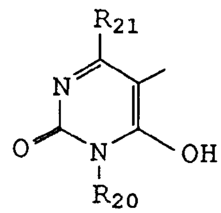

wherein $R_{20}$ is synonymous with those represented by $R_4$ of the foregoing Formula [$A_1$]; and $R_{21}$ represents a hydrogen atom or a group given by $R_2$ in the foregoing Formula [III].

Formula

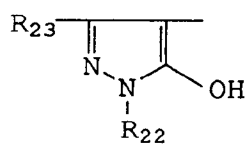

wherein $R_{22}$ is synonymous with those represented by $R_5$ of the foregoing Formula [$A_2$]; and $R_{23}$ is synonymous with those represented by $R_6$ of the foregoing Formula [$A_2$].

Formula

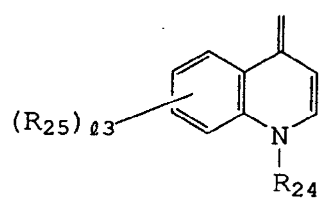

wherein $R_{24}$ is synonymous with those given by $R_4$ of the foregoing Formula [$A_1$]; $R_{25}$ is synonymous with those given by $R_2$ of the foregoing Formula [III]; and l3 is an integer of 0 through 3.

In Formula [II], the heterocyclic rings including Q include, for example, groups represented by the following formulas;

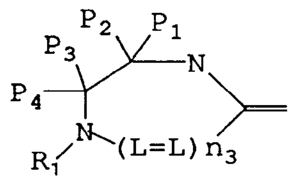 and 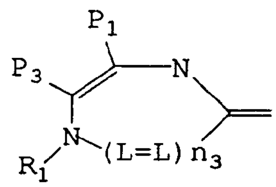

wherein Y represents O, S, Se, Te,

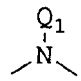 or 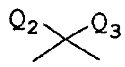

group, in which $Q_1$, $Q_2$ and $Q_3$ each represents an alkyl group, an aryl group or a heterocyclic group; $P_1$, $P_2$, $P_3$ and $P_4$ each represents a hydrogen atom, an alkyl group, an aryl group or a heterocyclic group and one of groups represented by $P_1$ and $P_2$ may be bonded with one of groups represented by $P_3$ and $P_4$ to form a ring; $R_1$, L and $n_3$ are the same as those defined in Formula II, respectively.

Now, the typical examples of the compounds represented by Formulas [I] through [V] will be given below.

I − 1

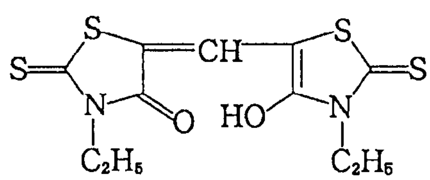

I − 2

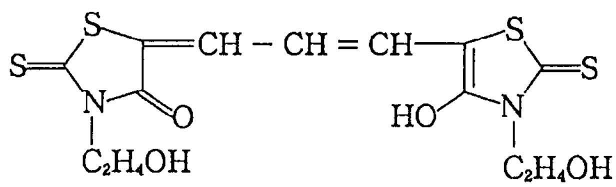

I − 3

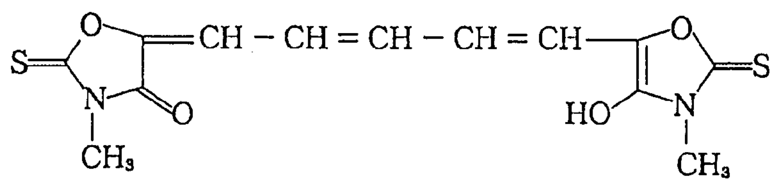

I－4

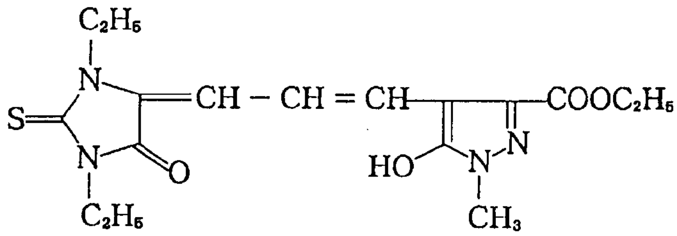

I－5

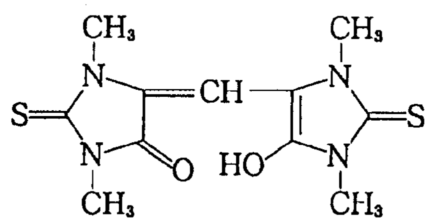

I－6

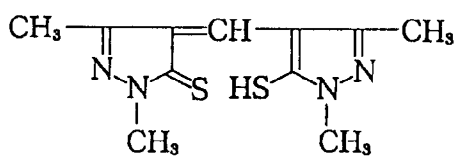

I－7

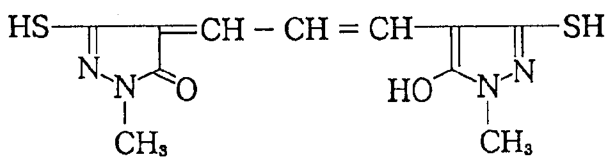

I－8

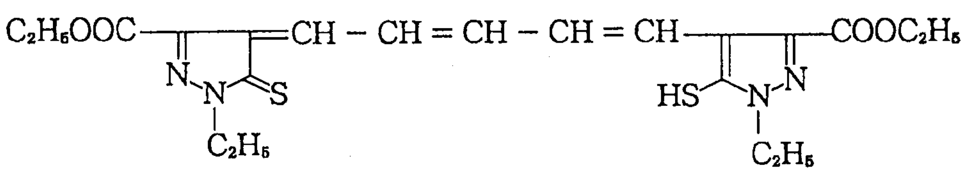

I－9

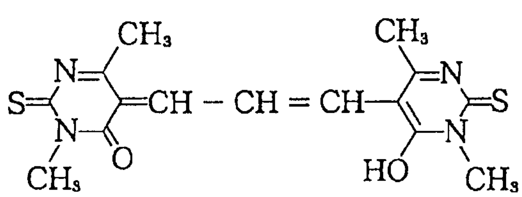

I − 10

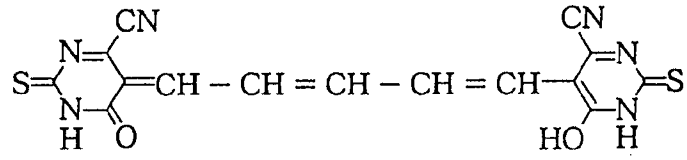

I − 11

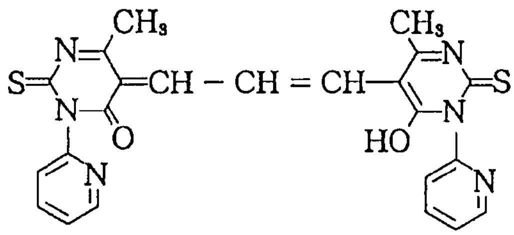

I − 12

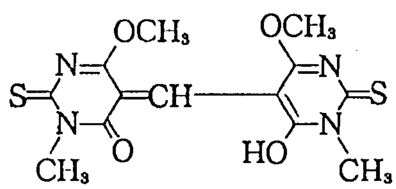

II − 1

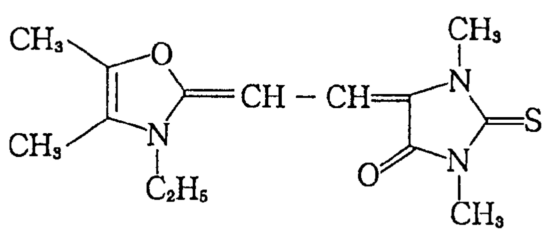

II − 2

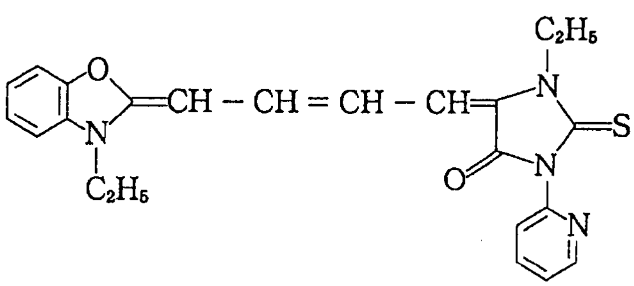

II − 3

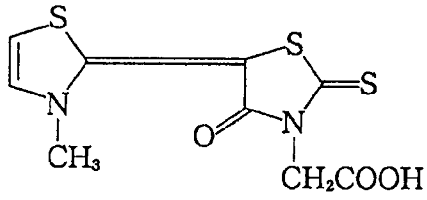

II − 4

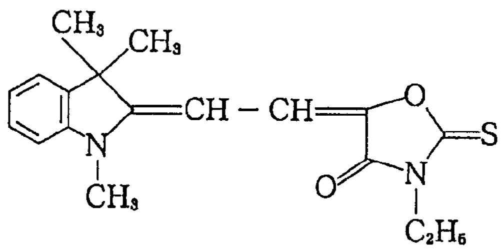

II − 5

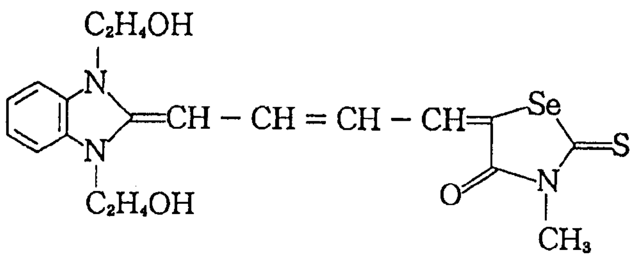

II − 6

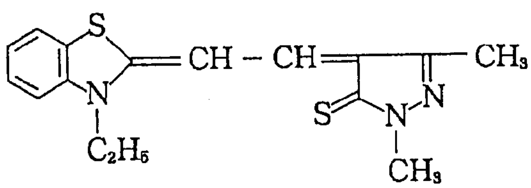

II − 7

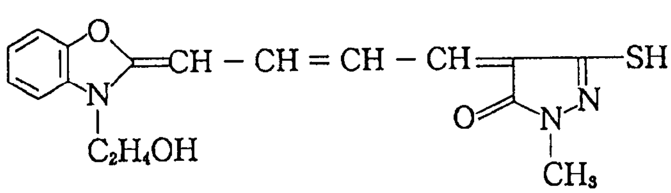

II − 8

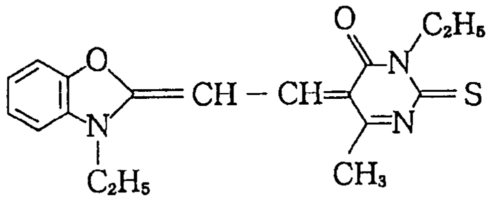

II − 9

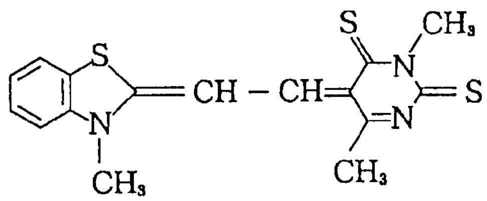

III − 1

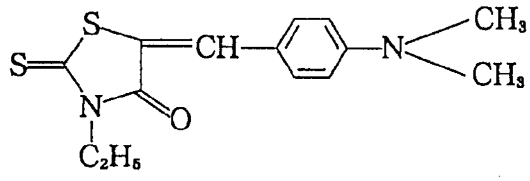

III − 2

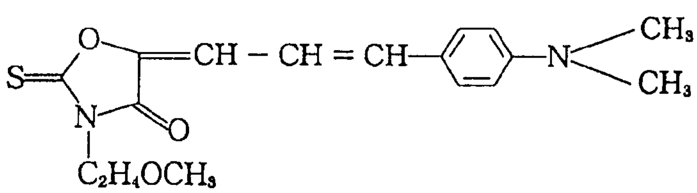

III − 3

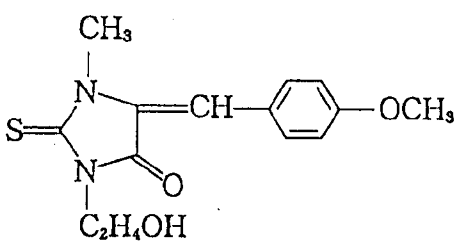

III − 4

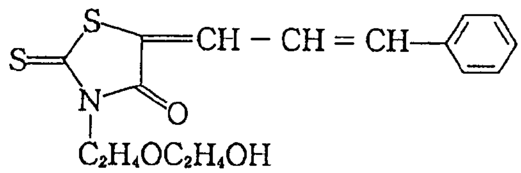

III − 5

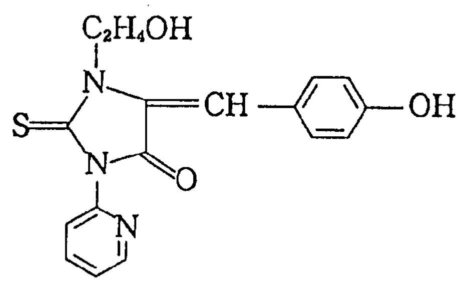

III − 6

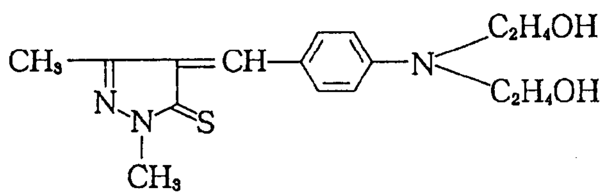

III − 7

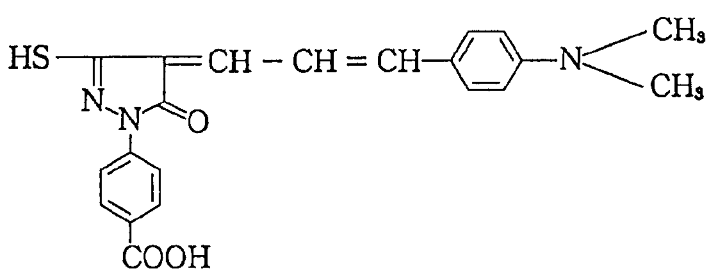

III − 8

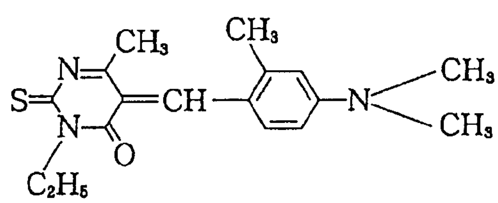

III－9

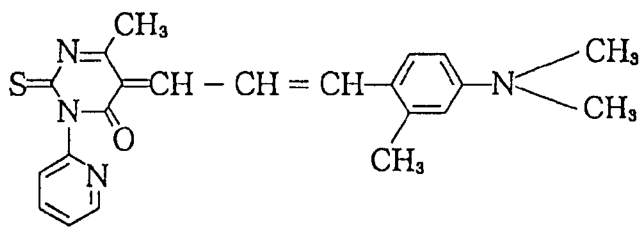

IV－1

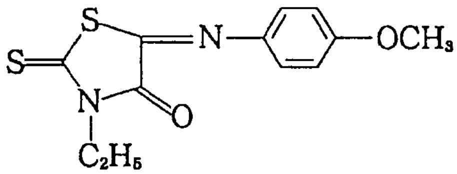

IV－2

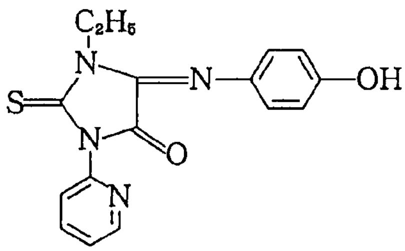

IV－3

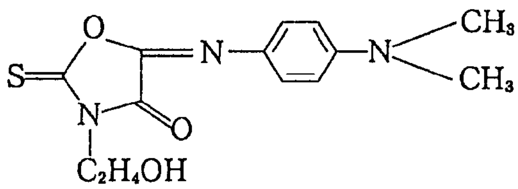

IV－4

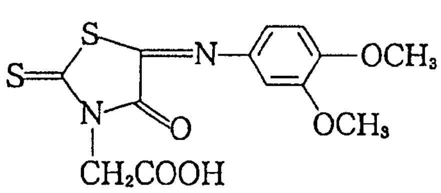

IV − 5

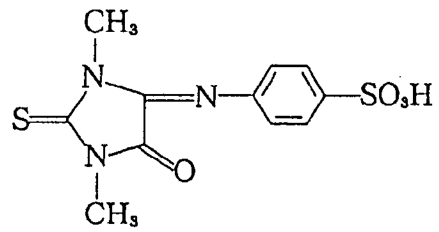

IV − 6

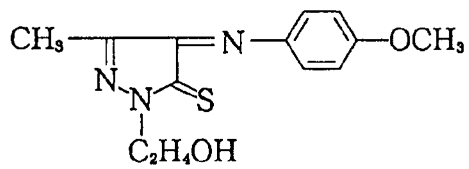

IV − 7

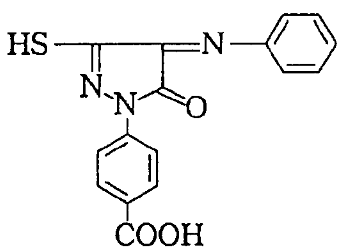

IV − 8

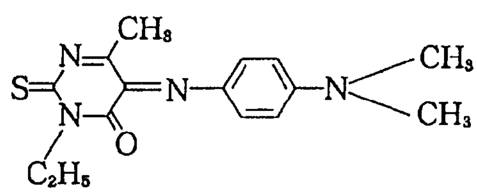

IV − 9

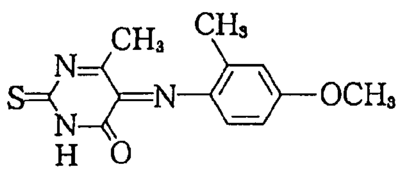

V − 1

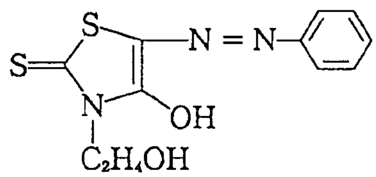

V − 2

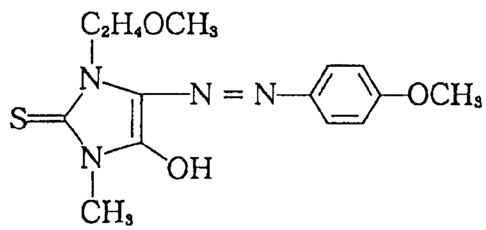

V − 3

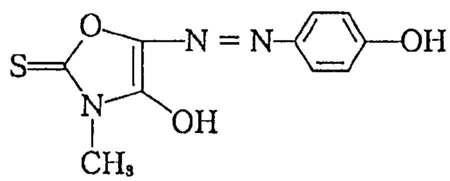

V − 4

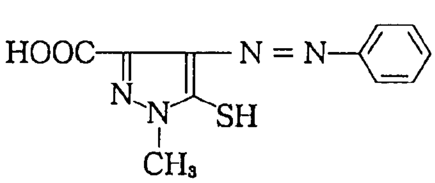

V-5

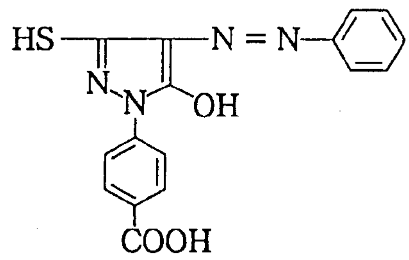

V-6

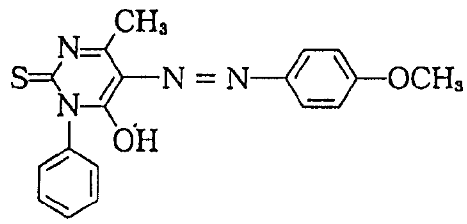

The method of preparing the silver salts from the above-mentioned dyes and the method of adding the silver salts into a light-sensitive material may be referred to the methods described in the foregoing British Patent No. 1,077,049 and U.S. Patent No. 3,471,293.

In the light-sensitive materials of the invention, the silver salts of the dyes represented by the foregoing Formulas [I] through [V] may be served as an anti-irradiation dye by containing the silver salts of the dyes into a silver halide emulsion layer, and the silver salts of the dyes may also be served as a filter dye or anti-irradiation dye by containing them into a non-light-sensitive hydrophilic colloidal layer. It is further allowed to make combination use of plural silver salts of the dyes so as to meet the purposes and they may be used together with the other dyes in combination, provided that the effects of the invention cannot be spoiled.

In the invention, a filter layer or an anti-irradiation layer may contain the silver salt of a dye in an amount within the range of, desirably, 0.01 to 2.0 $g/m^2$, preferably, 0.05 to 2.0 $g/m^2$, most preferably 0.1 to 1.0 $g/m^2$. The above-mentioned layers each may contain gelatin in an amount within the range of, desirably, 0.3 to 1.5 $g/m^2$ and, preferably, 0.5 to 1.0 $g/m^2$.

In the filter layer or anti-irradiation layer of the invention, the proportion of the content of the silver salt of the dye to the gelatin content (or a content of the silver salt of a dye/a content of gelatin) is not less than 0.1 or within the range of desirably, 0.1 to 2.0 and, preferably, 0.2 to 1.0.

The supports for the light-sensitive materials of the invention include, for example, those made of cellulose acetate or cellulose nitrate, such as a polyester film made of polyethylene terephthalate, a polyolefin film made of polyethylene, a polystyrene film, a polyamide film, a polycarbonate film, a baryta paper sheet, a polyolefin-coated paper sheet, a polypropylene synthetic paper sheet, a glass plate and a metal sheet. These supports may suitably selected to use as to meet the application of light-sensitive materials.

The hydrophilic colloids applicable to the light-sensitive materials of the invention include, for example, gelatin, a gelatin derivative such as phthalated gelatin and benzenesulfonylated gelatin, a water-soluble natural polymer such as agar, cassein and alginic acid, a synthetic resin such as polyvinyl alcohol and polyvinyl pyrrolidone and a cellulose derivative such as carboxymethyl cellulose. They may be used independently or in combination.

In the light-sensitive materials of the invention, the silver halide emulsions applicable thereto include, for example, silver chloride, silver iodide, silver chlorobromide, silver iodobromide and silver chloroiodobromide, which may be applicable to any ordinary silver halide emulsions.

The silver halide emulsions applicable to the light-sensitive materials of the invention can be prepared in the various preparation processes including the processes usually carried out; namely, the process described in JP Examined Publication No. 46-7772/1971 or the process described in U.S. Patent No. 2,592,250. To be more concrete, the emulsions can be prepared in any one of the processes such as the so-called conversion type emulsion preparation process in which, for example, an emulsion is so prepared as to contain silver salt grains comprising at least a part of silver salts having a solubility greater than that of silver bromide and at least a part of the grains is then converted into a silver bromide salt or a silver iodobromide salt. The resulting silver

halide emulsion can be sensitized with a chemical sensitizer including, for example, a sulfur sensitizer such as a thiosulfate, allyl thiocarbamide, thiourea, allyl isothiocyanate and cystine, an active or inert selenium sensitizer, a noble metal sensitizer such as a gold compound, e.g., potassium chloroaurate, auric trichloride, potassium auric thiocyanate and 2-aurothiabenzthiazole methyl chloride, a palladium compound, e.g., ammonium chloropalladate and sodium chloropalladate, a platinium compound, e.g., potassium chloroplatinate, a ruthenium compound or the combinations of the above-given sensitizers. The emulsions can also be subject to a reduction sensitization with a reducing agent, as well as to the chemical sensitization. The emulsions may also be stabilized with a triazole, an imidazole, an azaindene, a benzthiazolium compound, a zinc compound, a cadmium compound, a mercaptan or the mixtures thereof. The emulsions may further contain the sensitizing compounds of the thioether type, the quaternary ammonium salt type or the polyalkylene oxide type.

If required, the silver halide emulsions applicable to the light-sensitive materials of the invention are allowed to be spectrally sensitized with a sensitizing dye. The sensitizing dyes-applicable thereto include those of the various types, for example, a cyanine dye, a melocyanine dye, a complex cyanine dye, an oxonol dye, a hemioxonol dye, a styryl dye, a melostyryl dye and a streptocyanine dye. These sensitizing dyes may be used independently or in combination.

In the light-sensitive materials of the invention, the emulsion layers and other hydrophilic colloidal layers thereof are allowed to contain a wetting agent, a plasticizer and a physical layer property improver including, for example, glycerol, dihydroxyalkane such as 1,5-pentadiol, an ethylene bisglycollic acid ester, bisethoxy diethylene glycol succinate and a water-diffusible fine-grained polymer compound prepared in an emulsification-polymerization. These layers are also allowed to contain photographic additives including, for example, a hardener such as an aldehyde compound, an N-methylol compound, e.g., N,N′-dimethylol urea, mucohalogenoacid, divinyl sulfonic acid, an active halide compound, e.g., 2,4-dichloro-6-hydroxy-s-triazine, a dioxane derivative, a divinyl ketone, an isocyanate and a carbodiimide; a surfactant such as saponin, polyalkylene glycol, polyalkylene glycol ether, an alkyl sulfonate, an alkyl benzene sulfonate and an alkyl naphthalene sulfonate and, in addition, a fluorescent whitening agent, an antistatic agent, an antistaining agent, a UV absorbent and a stabilizer.

In the light-sensitive materials of the invention, the silver halide emulsion layers are allowed to contain a color-forming coupler. The couplers may be of the 4-equivalent type or the 2-equivalent type. The couplers may also be a colored coupler for masking use or a coupler capable of releasing a development inhibitor. The yellow color forming couplers usually advantageous for this purpose includes of an open-chained ketomethylene type compound such as those of the acylacetamide type. The magenta color forming couplers usually advantageous for this purpose includes of a pyrazolone type compound, a pyrazolotriazole type compound and a pyrazolotetrazole type compound. The cyan color forming couplers usually advantageous for this purpose includes a phenol and naphthol type compound.

The light-sensitive materials of the invention are allowed to have any layer arrangements which any ordinary type light-sensitive materials may have.

## EXAMPLES

### EXAMPLE 1

Both of 0.1 mols of one of the dyes shown in Table-1 and 10.1 g (0.1 mols) of triethyl amine were dissolved in 1000 ml of water and 200 ml of an aqueous silver nitrate solution having a proportion of 1 mol per liter was then dropped therein with stirring. The resulting precipitation was filtrated and the filtrate was washed and then dried, so that the objective silver salts of the dyes could be prepared, respectively.

To 700 ml of an aqueous 3% gelatin solution, both of 0.05 mols of the above-mentioned silver salt of one of the dyes and 30 ml of a solution containing a 6.7% surfactant, 'Triton X-200' manufactured by Rohm & Haas Co., were added and, further, 2 kgs of glass beads having a diameter of 1mm were added. The resulting mixtures were each pulverized for 8 hours with a stirring ball mill, ('Aquamizer QA-5' manufactured by Hosokawa Micron Co., Ltd.), so that the dispersions of the silver salts of the dyes could be prepared, respectively.

To 100 ml each of the resulting dispersions, both of 0.1 g of bisvinyl sulfonyl methyl ether [H-1] as a gelatin hardener and a coating aid [Su-1] were added. The resulting mixture was coated on a cellulose triacetate film support already subbed with a gelatin layer so as to contain the silver salt of each dye in an amount of 0.001 mols/$m^2$ and then dried up, so that Samples 1-1 through 1-16 could be prepared, respectively.

In the process described in Example 1 of JP OPI Publication No. 3-23441/1991, the fine-grained dispersion of dye D-2 was prepared. Layer hardener [H-1] and coating aid [Su-1] were added thereto in the same manner as in Samples 1-1 through 1-16. The resulting mixture was coated on a cellulose triacetate film support already subbed with a gelatin layer so as to contain the dye in an amount of 0.001 mols/$m^2$ and dried up, so that Sample

1-17 could be prepared.

In accordance with the process described in Examples 1 through 9 of JP OPI Publication No. 63-291051/1988, an aqueous gelatin solution was added with dye D-3 and a polymer mordant in an amount about 40 times as much as the dye amount, and the resulting mixture was coated on a cellulose triacetate film support already subbed with a gelatin layer so as to contain the dye in an amount of 0.001 mols/$m^2$ and dried up, so that Sample 1-18 could be prepared.

The resulting samples 1-1 through 1-18 were each processed with the following fixer A, an alkali solution B or water at 20°C for 15 seconds. After washing and drying the processed samples, they were measured with a spectrophotometer so that the discoloration ratios of the processed samples to the unprocessed same samples in the maximum absorption wavelength according to the following formula. The results of the measurements will be shown in Table-1.

Discoloration ratio (%) = [1 - (Processed sample density / Unprocessed sample density)]x100

[Fixer A]

| | |
|---|---|
| Sodium thiosulfate | 240 g |
| Sodium sulfite anhydrous | 15 g |
| Glacial acetic acid | 15 g |
| Aluminium potassium sulfate | 15 g |
| Add water to make | 1000 m; |

[Alkali solution B]

| | |
|---|---|
| Potassium carbonate | 37.5 g |
| Add water to make | 1000 ml |
| Adjust pH with 1N $H_2SO_4$ to be | pH 10.2 |

Table 1

| Sample No. | Dye | Discoloration ratio, after washed (%) | Discoloration ratio, after processed with Alkali solution B (%) | Discoloration ratio, after processed with Fixer A (%) | Remarks |
|---|---|---|---|---|---|
| 1- 1 | D-1 | 0 | 0.1 | 89.7 | Comparison |
| 1- 2 | I-1 | 0 | 0.2 | 95.2 | Invention |
| 1- 3 | I-2 | 0 | 0.3 | 96.4 | Invention |
| 1- 4 | I-12 | 0 | 0.5 | 95.7 | Invention |
| 1- 5 | II-1 | 0 | 0 | 96.3 | Invention |
| 1- 6 | II-3 | 0 | 3.0 | 96.4 | Invention |
| 1- 7 | II-6 | 0 | 0.7 | 95.7 | Invention |
| 1- 8 | III-1 | 0 | 1.0 | 95.1 | Invention |
| 1- 9 | III-3 | 0 | 0.4 | 95.7 | Invention |
| 1-10 | III-6 | 0 | 2.0 | 95.0 | Invention |
| 1-11 | IV-1 | 0 | 0.3 | 94.9 | Invention |
| 1-12 | IV-3 | 0 | 0.5 | 95.6 | Invention |
| 1-13 | IV-7 | 0 | 5.0 | 94.9 | Invention |
| 1-14 | V-1 | 0 | 2.0 | 95.6 | Invention |
| 1-15 | V-4 | 0 | 4.0 | 94.9 | Invention |
| 1-16 | V-5 | 0 | 5.5 | 95.0 | Invention |
| 1-17 | D-2 | 0 | 77.5 | 1.0 | Comparison |
| 1-18 | D-3 | 0.8 | 51.3 | 1.6 | Comparison |

Comparative dye D-1

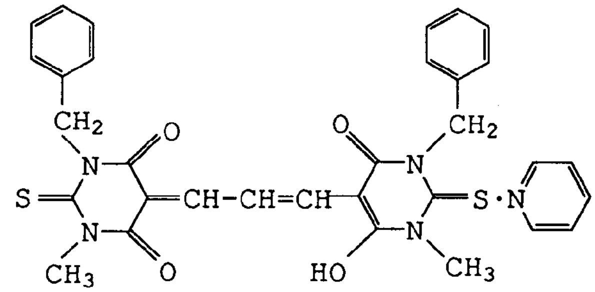

Comparative dye D-2

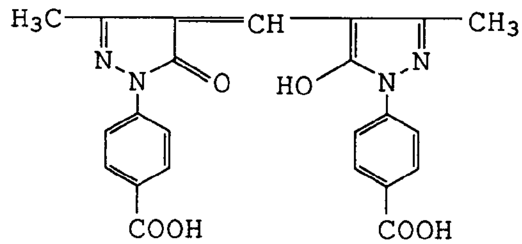

Comparative dye D-3

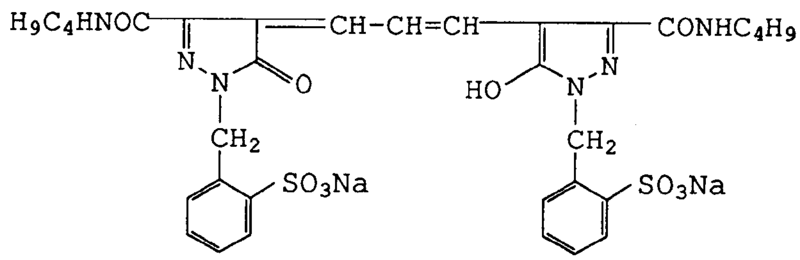

Refer to JP OPI Publication No.63-139949/1988

[Su-1]

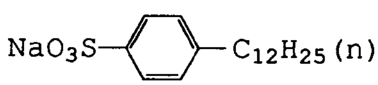

Polymer dispersion mordant

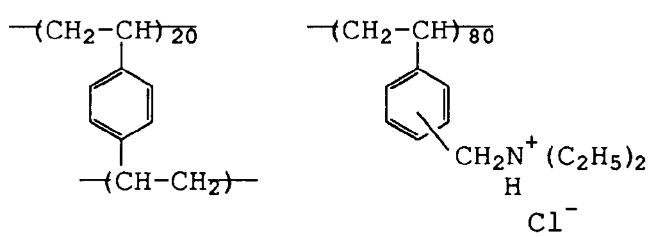

It can be proved from Table-1 that the silver salts of the dyes of the invention can have a greater discoloration ratio after a fixing treatment as compared to the silver salt of well-known comparative dye D-1, dispersed comparative dye D-2 or comparative dye D-3 insolubilized by the mordant.

It can also be proved that the silver salts of the dyes of the invention have an excellent antidiffusibility equivalent to those of the silver salts of the comparative dyes and the antidiffused comparative dyes. The above fact is supporsed by the results that the discoloration after washing is little in all of the samples.

EXAMPLE 2

(Preparation of Sample 2-1)

Sample 2-1 was prepared in the manner that layer 1 was formed by coating an aqueous 10% gelatin solution on a cellulose triacetate film support already subbed with a gelatin layer and, at the same time, a light-sensitive silver halide emulsion layer having the following composition and a surface protective layer were double-coated on the resulting layer 1.

<Composition of the light-sensitive silver halide emulsion layer>

| | |
|---|---|
| A silver iodobromide emulsion (a monodisperse type uniform composition emulsion having an average grain size of 0.48μm and containing 2 mol% of iodine) | 3.2 $g/m^2$ |
| Gelatin | 1.6 g/g of silver |
| Additive | |
| Sensitizing dye | $4.8 \times 10^{-4}$ mols/mol of silver |

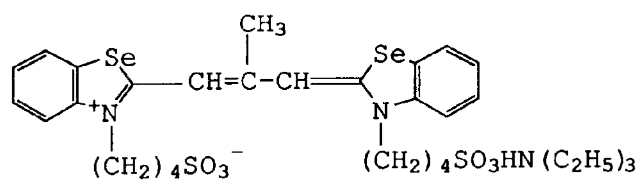

| | |
|---|---|
| Coating aid, sodium dodecylbenzene sulfonate Su-1 | 0.1 $mg/m^2$ |

<Composition of the surface protective layer>

| | |
|---|---|
| Gelatin | 0.6 $g/m^2$ |
| Coating aid, sodium N-oleyl-N-methyl taurinate Su-2 | 0.2 $g/m^2$ |
| Hardener, bisvinyl sulfonyl methyl ether H-1 | 0.05 g/g of gelatin |

(Preparation of Samples 2-2 through 2-15)

Multilayered photographic elements (Samples 2-2 through 2-15) were each prepared in the same manner as in Sample 2-1, except that the aqueous 10% gelatin solution for layer 1 of Sample 2-1 was replaced by each of the aqueous gelatin solutions containing the silver salts of dyes or the comparative dyes shown in Table-2. The gelatin solutions containing dyes were prepared in the manner the same as in Example 1. The dye contents thereof were so adjusted to be 0.001 mols/$m^2$.

Each of the resulting samples 2-1 through 2-15 was exposed to white light through an optical wedge and was then treated in the following development process. Then, the influences of the dyes on the photographic characteristics thereof were compared to each other samples.

Processing steps (made at 20°C)

| | |
|---|---|
| Developing step | 2 minutes |
| Fixing step | 3 minutes |
| Washing step | 3 minutes |
| Drying step | |

The compositions of the processing solutions used in the above-mentioned processing steps were as follows.

Developer

| | |
|---|---|
| Water | 500 ml |
| Hydroquinone | 8 g |
| Metol | 2 g |
| Sodium sulfite anhydrous | 90 g |
| Sodium carbonate monohydrate | 52.5 g |
| Potassium bromide | 5 g |
| Add water to make | 1 liter |

[Fixer]

| | |
|---|---|
| Water | 600 ml |
| Ammonium thiosulfate | 80 g |
| Sodium sulfite, anhydrous | 5 g |
| Sodium bisulfite | 5 g |
| Add water to make | 1 liter |

Adjust pH with acetic acid to be pH=6.0

The results thereof will be shown in Table-2.

Table-2

| Sample | Dye in Gelatin Layer 1 | fog | Remarks | |
|---|---|---|---|---|
| 2- 1 | None | 0.07 | | For control |
| 2- 2 | Silver salt of D-1 | 0.13 | | Comparison |
| 2- 3 | Silver salt of Dye I-7 | 0.07 | | Invention |
| 2- 4 | Silver salt of Dye I-9 | 0.08 | | Invention |
| 2- 5 | Silver salt of Dye I-11 | 0.07 | | Invention |
| 2- 6 | Silver salt of Dye II-2 | 0.07 | | Invention |
| 2- 7 | Silver salt of Dye II-8 | 0.07 | | Invention |
| 2- 8 | Silver salt of Dye III-2 | 0.08 | | Invention |
| 2- 9 | Silver salt of Dye III-8 | 0.07 | | Invention |
| 2-10 | Silver salt of Dye IV-4 | 0.08 | | Invention |
| 2-11 | Silver salt of Dye IV-8 | 0.08 | | Invention |
| 2-12 | Silver salt of Dye V-2 | 0.07 | | Invention |
| 2-13 | Silver salt of Dye V-6 | 0.08 | | Invention |
| 2-14 | Comparative dye D-2 | 0.07 | Yellow stains found a little | Comparison |
| 2-15 | Comparative dye D-3 with Polymer mordant | 0.08 | Very small coagulations found in coated layers | Comparison |

In comparative dye D-1, as shown in Table-2, the fog density was increased to some extent and an influence was observed on fog production. In comparative dye D-3, the coatability was affected, though no influence was observed on fog production. In the silver salts of the dyes of the invention, on the other hand, it was proved that there was no trouble on the coatability and the adjacent layers did not affect so much on the silver halides. The dyes of the invention have the excellent characteristics because the image sharpness thereof was also improved as compared to Sample 2-1.

## Claims

1. A silver halide photographic light-sensitive material comprising a support and a silver halide emulsion layer wherein said silver halide emulsion layer or a hydrophilic colloid layer other than said silver halide emulsion layer provided on said support contains a silver salt of a compound represented by the following Formula I, II, III, IV or V:

$$A=L-(L=L)_{n1}-E \qquad (I)$$

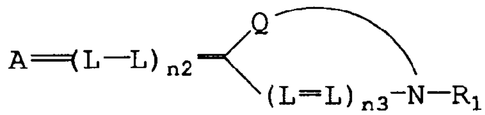

(II)

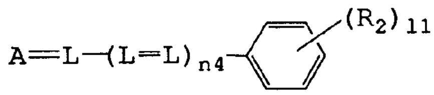

(III)

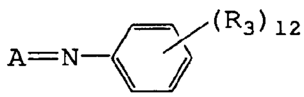

(IV)

A'-N=N-W (V)

wherein $R_1$ is an alkyl group or an alkenyl group; $R_2$ and $R_3$ are independently an alkyl group, an alkenyl group, an aryl group, a heterocyclic group, a halogen atom, a cyano group, a sulfo group, a $-COR_{10}$ group, a $-CON(R_{10})(R_{11})$ group, a $-N(R_{10})(R_{11})$ group, a $-OR_{10}$ group, a $-SOR_{10}$ group, a $-SO_2R_{10}$ group, a $-SO_2N(R_{10})(R_{11})$ group, a $-N(R_{10})COR_{11}$ group, a $-N(R_{10})SO_2R_{11}$ group, a $-N(R_{10})CON(R_{11})(R_{12})$ group, a $-SR_{10}$ group or a $-COOR_{10}$ group, in which $R_{10}$, $R_{11}$ and $R_{12}$ are independently a hydrogen atom, an alkyl group, an alkenyl group, an aryl group or a heterocyclic group; L is a methylene group; E is a group having an acidic nucleus; Q is a group of non-metal atom necessary for forming a heterocyclic group; W is an aryl group or a heterocyclic group; $n_1$ and $n_2$ are each an integer of 0 to 3; $n_3$ and $n_4$ are each an integer of 0 to 2; $l_1$ and $l_2$ are each an integer of 0 to 3; A is a group represented by the following Formula $A_1$, $A_2$, $A_3$ or $A_4$; and A' is a group represented by the following Formula $A'_1$, $A'_2$, $A'_3$ or $A'_4$;

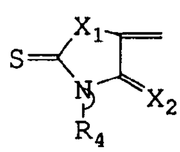

($A_1$)

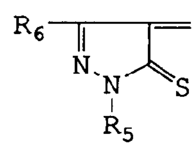

($A_2$)

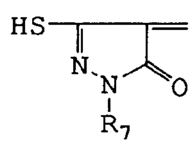

($A_3$)

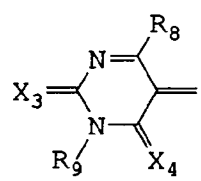

($A_4$)

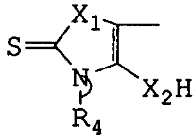

($A'_1$)

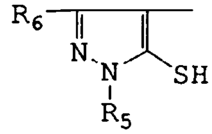

($A'_2$)

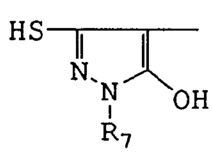

($A'_3$)

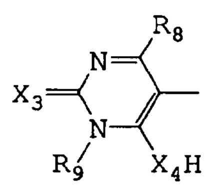

($A'_4$)

wherein $R_4$, $R_5$, $R_7$ and $R_9$ are independently a hydrogen atom, an alkyl group, an alkenyl group, an aryl

group or a heterocyclic group; $R_6$ is an alkyl group, an alkenyl group, an aryl group, a heterocyclic group, a cyano group, a-$COR_{13}$ group, a -$CON(R_{13})(R_{14})$ group, a -$N(R_{13})(R_{14})$ group, a -$OR_{13}$ group, a -$SOR_{13}$ group, a -$SO_2R_{13}$ group, a -$SO_2N(R_{13})(R_{14})$ group, a -$N(R_{13})COR_{14}$ group, a -$N(R_{13})SO_2R_{14}$ group, a -$N(R_{13})CON(R_{14})(R_{15})$ group, a -$SR_{13}$ group or a -$COOR_{13}$ group, in which $R_{13}$, $R_{14}$ and $R_{15}$ are independently a hydrogen atom, an alkyl group, an alkenyl group, an aryl group or a heterocyclic group; groups represented by $R_6$ is the same as those represented by $R_2$ and $R_3$; $X_1$ is an oxygen atom, a sulfur atom, a selenium atom or a =N-$R_{16}$ group; groups represented by $R_{16}$ are the same as those represented by $R_4$; $X_2$, $X_3$ and $X_4$ are each an oxygen atom or a sulfur atom.

2. The light-sensitive material of claim 1, wherein said hydrophilic colloid layer is a filter layer.

3. The light-sensitive material of claim 2, wherein said filter layer contains said silver salt of said compound in an amount of from 0.01 $g/m^2$ to 2.0 $g/m^2$.

4. The light-sensitive material of claim 3, wherein said filter layer contains said silver salt of said compound in an amount of from 0.05 $g/m^2$ to 2.0 $g/m^2$.

5. The light-sensitive material of claim 2, wherein said filter layer contains gelatin in an amount of 0.3 $g/m^2$ to 1.5 $g/m^2$.

6. The light-sensitive material of claim 1, wherein said hydrophilic colloid layer is an antihalation layer.

7. The light-sensitive material of claim 6, wherein said antihalation layer contains said silver salt of said compound in an amount of from 0.01 $g/m^2$ to 2.0 $g/m^2$.

8. The light-sensitive material of claim 7, wherein said antihalation layer contains said silver salt of said compound in an amount of from 0.05 $g/m^2$ to 2.0 $g/m^2$.

9. The light-sensitive material of claim 5, wherein said antihalation layer contains gelatin in an amount of 0.3 $g/m^2$ to 1.5 $g/m^2$.

European Patent Office

# EUROPEAN SEARCH REPORT

Application Number

EP 92 30 5901

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-524 500 (KODAK LIMITED)<br>* page 2, left column, line 9 - line 19 *<br>* claims 1-4,6,7; figures 1-8 * | 1-9 | G03C1/825<br>G03C1/83 |
| X | GB-A-524 558 (KODAK LIMITED)<br>* page 2, left column, line 38 - line 40 * | 1-9 | |
| X | US-A-2 719 088 (ARTHUR H. HERZ)<br>* claims 2,3 * | 1-9 | |
| D,A | GB-A-1 077 049 (VEB FILMFABRIKEN WOLFEN)<br>* the whole document * | 1-9 | |
| D,A | US-A-3 471 293 (H.ÖHLSCHLÄGER ET AL)<br>* the whole document * | 1-9 | |

TECHNICAL FIELDS SEARCHED (Int. Cl.5)

G03C
C09B

The present search report has been drawn up for all claims

| Place of search | Date of completion of the search | Examiner |
|---|---|---|
| THE HAGUE | 23 SEPTEMBER 1992 | BOLGER W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)